# EUROPÄISCHE PATENTANMELDUNG

(11) **EP 4 350 337 A1**
(43) Veröffentlichungstag der Anmeldung: **10.04.2024**
(21) Anmeldenummer: 23201606.3
(22) Anmeldetag: 04.10.2023
(51) Int. Cl.: G01N 27/22, F16L 5/02, G01M 3/16, H02G 3/22

(54) **FEUCHTESENSOR, DICHTELEMENT MIT FEUCHTESENSOR UND GEBÄUDESTRUKTUR**

(30) Priorität: 06.10.2022 DE 102022125828
(71) Anmelder: Watermann Polyworks GmbH, 32758 Detmold (DE)
(72) Erfinder: Watermann, Markus, 32760 Detmold (DE)
(74) Vertreter: Freischem & Partner Patentanwälte mbB

(57) **Zusammenfassung**

Die Erfindung betrifft ein Dichtelement (10) für eine Gebäudestruktur, insbesondere eine Wand, eine Decke oder einen Fußboden, wobei das Dichtelement (10) einen Feuchtesensor (12) aufweist. Der Feuchtesensor weist (12) einen RFID-Transponder (14) auf, wobei ein Messwert des Feuchtesensors (12) über den RFID-Transponder (14) auslesbar ist. Der Feuchtesensor (12) weist zur Feuchtemessung zwei Leiterbahnen (16) auf, die sich von dem RFID-Transponder (14) weg erstrecken.

## Beschreibung

Die Erfindung betrifft einen Feuchtesensor für eine Gebäudestruktur, ein Dichtelement mit einem Feuchtesensor für eine Gebäudestruktur sowie eine Gebäudestruktur mit einem solchen Feuchtesensor und/oder mit einem solchen Dichtelement.

Dichtelemente der in Rede stehenden Art dienen in Gebäuden dazu, das Eindringen von Feuchtigkeit in Teil der Gebäudestruktur zu verhindern, in die keine Feuchtigkeit eindringen soll. Ein Beispiel für den Anwendungsfall sind beispielsweise Nasszellen. Dort kommen die Oberflächen von Wänden, Decken oder Böden regelmäßig in den Kontakt mit Wasser, welches nicht in die unter diesen Oberflächen liegende Gebäudestruktur eindringen soll. Darüber hinaus werden gerade im Bereich von Nasszellen, aber auch in anderen Räumen und/oder Gebäudebestandteilen wasserführende Bauelemente, insbesondere Leitungen verlegt. Diese sind im regulären Betrieb in der Regel wasserdicht; treten jedoch Beschädigungen auf, kann ausgehend von derartigen Bauelementen ebenfalls Wasser in die Gebäudestruktur eindringen.

Feuchtigkeit, die in Wände, Decken oder Böden eintritt, kann erhebliche Schäden an Gebäuden verursachen. Daher ist es wünschenswert, das Eindringen von Feuchtigkeit in solche Bereiche einer Gebäudestruktur, in die keine Feuchtigkeit eindringen soll, möglichst frühzeitig zu erkennen.

Dies gestaltet sich in der Praxis oft schwierig, da die in Rede stehenden Gebäudestrukturen oftmals unzugänglich hinter den in Rede stehenden Dichtelementen liegen. Von daher wäre es wünschenswert, entstehende Feuchtigkeit mittels eines geeigneten Sensors zu erfassen. Dabei ist es weiterhin wünschenswert, dass derartige Sensoren ausgelesen werden können, ohne dass hierfür eine aufwändige Installation, beispielsweise von elektrischen Leitungen oder ähnlichem, die zu dem Sensor führen, notwendig ist.

Es sind daher Feuchtesensoren entwickelt worden, auf einem RFID-Transponder basieren. Derartige Feuchtesensoren mit RFID-Transponder sind beispielsweise unter der Bezeichnung DOGBONE oder INVISENSE bekannt. Bei derartigen Sensoren erfolgt die Messung der Feuchtigkeit durch die Beeinflussung der RFID-Antenne des RFID-Transponders. Leiterbahnen des RFID-Transponders, nämlich die RFID-Antenne, werden durch Feuchtigkeit beeinflusst. Insbesondere die Kapazität der Antenne des RFID-Transponders wird beeinflusst. Dadurch ändert sich insbesondere die Resonanzfrequenz des Sensors. Dadurch lassen sich die RFID-Transponder als Feuchtesensor nutzen, um Feuchtigkeit in einer Gebäudestruktur aufzuspüren.

Nachteilig an derartigen Feuchtesensoren ist jedoch, dass die Verschiebung der Resonanzfrequenz bei der Detektion der Feuchte eine dies berücksichtigende sensortypspezifische Auslesetechnik erfordert. Entsprechende Auslesegeräte sind kostenintensiv und stehen daher häufig nicht zur Verfügung. Insbesondere für kleine Handwerksbetriebe ist es überfordernd, für eine Vielzahl marktgängige Sensortypen geeignete Auslesegeräte vorzuhalten.

Nachteilig an derartigen bekannten Feuchtesensoren ist zudem, dass eine Feuchtemessung lediglich punktuell erfolgen kann. Sollen großflächigere Bereiche einer Gebäudestruktur überwacht werden, ist die Installation einer Vielzahl solcher Feuchtesensoren notwendig. Wird lediglich ein einzelner Feuchtesensor verwendet, beispielsweise um die Dichtigkeit eines Rohres zu überwachen, so ist es möglich, dass ein Schaden nicht bemerkt wird, wenn sich die Feuchtigkeit in der Gebäudestruktur außerhalb des von dem von dem Feuchtesensor erfassbaren Bereich in der Gebäudestruktur ausbreitet.

Die Verwendung einer Vielzahl derartiger Feuchtesensoren verursacht jedoch in der Praxis entsprechende Kosten. Dazu gehören nicht nur die Anschaffungskosten des jeweiligen Feuchtesensors, es muss auch dokumentiert werden, an welcher Stelle sich der RFID-Transponder befindet, da das Auslesen des Transponders in der Regel nur auf sehr kurze Distanz möglich ist. Entsprechend können schwer zugängliche Stellen auch nur schlecht überwacht werden, da der dort platzierte Feuchtesensor nicht oder nur schwer mit einem Auslesegerät erreicht werden kann. Hinzu kommt, dass das Ausleseverfahren zur Feuchtemessung komplex ist und spezielle Auslesegeräte erfordert, insbesondere um die Verschiebung der Resonanzfrequenz zu erfassen.

Der Erfindung liegt daher die Aufgabe zugrunde, einen Feuchtesensor für eine Gebäudestruktur, ein Dichtelement mit einem Feuchtesensor für eine Gebäudestruktur sowie eine Gebäudestruktur mit einem Dichtelement aufzuzeigen, bei denen die vorstehenden Nachteile nicht bzw. lediglich in verringertem Umfang auftreten.

Die Aufgabe wird gelöst durch einen Feuchtesensor, ein Dichtelement und eine Gebäudestruktur mit den Merkmalen der unabhängigen Ansprüche. Die Merkmale der abhängigen Ansprüche betreffen vorteilhafte Ausführungsformen. Bei der Gebäudestruktur kann es sich insbesondere um eine Wand, eine Decke oder einen Fußbodenhandeln.

Die Aufgabe wird durch einen Feuchtesensor für eine Gebäudestruktur gelöst. Der Feuchtesensor weist einen RFID-Transponder auf. Dabei ist ein Messwert des Feuchtesensors über den RFID-Transponder auslesbar. Der RFID-Transponder weist eine Antenne auf, mittels derer der Transponder auslesbar ist.

Die Aufgabe wird insbesondere dadurch gelöst, dass der Feuchtesensor zur Feuchtemessung einen von der Antenne getrennten Messfühler aufweist. Unter einem von der Antenne getrennten Messfühler ist insbesondere zu verstehen, dass es sich bei der Antenne und dem Messfühler um unterschiedliche Elemente und/oder räumlich diskrete Bereiche des Feuchtesensors handelt. Dies ermöglicht es, dass eine Feuchtemessung ohne die Beeinflussung der Antenne durchgeführt wird bzw. dass die Antenne nur unabhängig von der Feuchtemessung auf einer geeigneten Frequenz ausgelesen werden kann. Hierdurch wird insbesondere die Möglichkeit eröffnet, mit vergleichsweise kostengünstigen Standardgeräten den Feuchtesensor auszulesen.

Der Messfühler kann sich von dem RFID-Transponder weg erstrecken.

Aufgrund des Messfühlers, der sich von dem RFID-Transponder weg erstreckt, ist es möglich, einen gefährdeten Bereich, insbesondere vergleichsweise großflächig, auf das Auftreten von Feuchtigkeit zu überwachen. Durch den sich vom RFID-Transponder weg erstreckenden Messfühler kann der RFID-Transponder zudem in einiger Entfernung von dem zu überwachenden Bereich, insbesondere an einer vergleichsweise gut zugänglichen Stelle angeordnet werden. Daher muss im besten Fall zur Überwachung eines gefährdeten Bereichs lediglich ein einzelner RFID-Transponder ausgelesen werden, der sich vorzugsweise an einem zum Auslesen gut zugänglichen Bereich befindet.

Der RFID-Transponder kann auf einer Frequenz von 13,56 Mhz auslesbar sein. Ein auf dieser Frequenz auslesbarer RFID-Transponder hat insbesondere den Vorteil, dass er mit vielen handelsüblichen Geräten, insbesondere mit Smartphones, ausgelesen werden kann.

Bei dem RFID-Transponder kann es sich um einen passiven RFID-Transponder handeln. Unter einem passiven RFID-Transponder wird ein RFID-Transponder verstanden, der über die RFID-Antenne mit elektrischer Energie versorgt werden kann und insbesondere ansonsten keine weitere Energieversorgung aufweist. Ein derartiger passiver RFID-Transponder kann insbesondere genutzt werden, um den Feuchtesensor mit elektrischer Energie zu versorgen, d.h., dass die Energieversorgung des Feuchtesensors insbesondere über den RFID-Transponder erfolgt. Dies ermöglicht es, kostengünstige Feuchtesensoranordnungen herzustellen, die insbesondere nicht auf eine langlebige Energiequelle angewiesen sind. Da derartige Feuchtesensoren bei bestimmungsgemäßer Verwendung lange Zeiträume - beispielsweise Jahrzehnte - im Gebäude verbleiben sollen und auch über eine derart lange Zeit funktionsfähig bleiben sollen, ist die berührungslose Energieversorgung des Feuchtesensors über den RFID-Transponder dem Einbau einer langlebigen Energiequelle, wie beispielsweise einer Batterie, überlegen. Elektrische Zuleitungen zu dem Feuchtesensor vorzusehen, um diesen mit Energie zu versorgen, erscheint vergleichsweise umständlich. Ein Feuchtesensor hingegen, der über den passiven RFID-Transponder mit elektrischer Energie versorgt wird, kann vollständig verdeckt in die Gebäudestruktur integriert sein, ohne dass elektrische Installationen benötigt werden, und es ist gleichzeitig nicht zu befürchten, dass ein derartiger Feuchtesensor nach einem sehr langen Zeitraum nicht mehr genutzt werden kann, weil die Lebensdauer einer Batterie überschritten ist.

Alternativ und/oder ergänzend kann der Feuchtesensor eine von dem RFID-Transponder unabhängige Empfängerantenne des Feuchtesensors zur induktiven Energieübertragung aufweisen. Insbesondere kann die Energieversorgung des Feuchtesensors über die Empfängerantenne erfolgen. Unter einer von dem RFID-Transponder unabhängigen Empfängerantenne ist insbesondere zu verstehen, dass es sich bei der Empfängerantenne und dem RFID-Transponder um unterschiedliche Elemente und/oder räumlich diskrete Bereiche des Feuchtesensors handelt. Eine derartige Empfängerantenne bietet den Vorteil, für die induktive Energieübertragung optimiert zu sein und damit eine vergleichsweise leistungsstarke Energieversorgung zu ermöglichen. Dabei kann es sich um eine Empfängerantenne nach dem QI-Standard handeln. Die Nutzung des QI-Standards hat insbesondere den Vorteil, dass im Markt eine Vielzahl sehr kostengünstiger handelsüblicher Geräte verfügbar ist, über die der Feuchtesensor mit elektrischer Energie versorgt werden kann.

Der Feuchtesensor, insbesondere der RFID-Transponder, kann einen Datenspeicher zum Speichern von Daten aufweisen. Ein solcher Datenspeicher erlaubt es, Informationen zu hinterlegen. Bei diesen Informationen kann es sich beispielsweise um Informationen betreffend den Verbauer des Feuchtesensors in einer Gebäudestruktur und/oder den Zeitpunkt des Verbaus des Feuchtesensors in einer Gebäudestruktur handeln. Es können auch Informationen betreffend erfolgter Auslesungen hinterlegt werden, beispielsweise um zu dokumentieren, dass die durch den Feuchtesensor überwachte Gebäudestruktur mittels des Feuchtesensors auf Feuchtigkeit geprüft worden ist. Der Speicher und/oder ein Teil des Speichers kann dazu ausgebildet sein, einmalig mit Daten beschrieben zu werden. Derartige Daten können dann insbesondere mehrfach wieder ausgelesen werden. Auf diese Weise können Daten manipulationssicher abgelegt werden, so dass eine nachträgliche Veränderung der Daten, bei denen es sich insbesondere um die vorstehend genannten Informationen handeln kann, wirksam ausgeschlossen ist. Bei den hinterlegten, insbesondere manipulationssicher hinterlegten, Daten kann es sich insbesondere um Daten handeln, die ein eindeutiges Identifizieren des Feuchtesensors ermöglichen, beispielsweise eine Seriennummer.

Der Messfühler kann insbesondere durch ein Paar Leiterbahnen gebildet sein und/oder ein Paar Leiterbahnen aufweisen. Der Messfühler kann auch mehr als zwei Leiterbahnen aufweisen. Der Feuchtesensor ist in diesem Zusammenhang insbesondere derart gestaltet, dass die Leiterbahnen entlang des Messfühlers und/oder, zumindest im Wesentlichen, parallel zueinander verlaufen. So kann der Feuchtesensor auch das Auftreten von Feuchtigkeit an einem von dem RFID-Transponder entsprechend weit entfernten Ort und/oder entlang einer entsprechend langen Strecke erfassen.

Die Funktion des Sensors beruht insbesondere darauf, dass eine elektrische Größe mittels des Messfühlers, insbesondere zwischen den Leiterbahnen, gemessen wird. Bei dieser elektrischen Größe kann es sich beispielsweise um einen elektrischen Widerstand handeln, insbesondere einen Ohmschen Widerstand und/oder einen Wechselstrom-Widerstand. Der Wechselstrom-Widerstand wird auch als Impedanz bezeichnet. Insbesondere das Absinken des ohmschen Widerstands zwischen den Leitern eins Leiterpaares aufgrund von Feuchtigkeit kann durch den Feuchtesensor messbar sein.

Der Feuchtesensor oder ein Bestandteil des Feuchtesensors, insbesondere der Messfühler und/oder die Antenne des RFID-Transponders, kann als Druck auf ein Trägermaterial aufgebracht sein. Insbesondere Leiterbahnen des Messfühlers können als Druck auf das Trägermaterial aufgebracht sein. Das Aufbringen des Feuchtesensors oder des Bestandteils des Feuchtesensors mit einem Druckverfahren ermöglicht es, dessen Geometrie vergleichsweise frei zu bestimmen.

Dabei können der Feuchtesensor oder der Bestandteil des Feuchtesensors insbesondere als Geldruck auf das Trägermaterial aufgebracht sein. Es hat sich gezeigt, dass derartige gedruckte Feuchtesensoren oder Bestandteile von Feuchtesensoren als Geldruck vorteilhaft herstellbar sind.

Alternativ und/oder ergänzend können der Feuchtesensor oder der Bestandteil des Feuchtesensors insbesondere als Druck mit Metallionen auf das Trägermaterial aufgebracht sein. Es hat sich gezeigt, dass sich auf diese Weise insbesondere Leiterbahnen und/oder elektrische Schaltungen vorteilhaft im Druckverfahren herstellen lassen. Bei den Metallionen kann es sich insbesondere um Silberionen handeln.

Bei dem Trägerelement, auf das der Druck aufgebracht ist, kann es sich um ein Dichtelement, insbesondere ein Dichtelement entsprechend der nachstehenden Beschreibung handeln. Alternativ und/oder ergänzend kann es sich bei dem Trägerelement um ein Bauelement einer Gebäudestruktur, in die der Feuchtesensor verbaut ist, insbesondere einer nachstehend beschriebenen Gebäudestruktur, handeln. Das Bauelement kann insbesondere ein wasserführendes Bauelement, wie beispielsweise ein Rohr und/oder ein Abfluss sein.

Alternativ und/oder ergänzend kann der Feuchtesensor oder ein Bestandteil des Feuchtesensors, insbesondere der Messfühler und/oder die Antenne des RFID-Transponders, aus leitfähigem Kunststoff gefertigt sein. Insbesondere Leiterbahnen des Messfühlers können aus leitfähigem Kunststoff gefertigt sein. Feuchtesensoren oder Bestandteile von Feuchtesensoren aus leitfähigem Kunststoff haben insbesondere den Vorteil, dass sie eine hohe Flexibilität aufweisen und/oder sich mechanisch ähnlich einem aus Kunststoff gefertigten Trägerelement verhalten.

Der Feuchtesensor und/oder der Bestandteil des Feuchtesensors aus leitfähigem Kunststoff kann insbesondere an das Trägerelement angespritzt sein. Mit anderen Worten erfolgt die Herstellung des Feuchtesensors oder des Bestandteils des Feuchtesensors aus leitfähigem Kunststoff insbesondere mittels eines Spritzgussverfahrens.

Bei dem Trägerelement, an das der Feuchtesensor und/oder der Bestandteil des Feuchtesensors angespritzt ist, kann es sich um ein Dichtelement, insbesondere ein Dichtelement entsprechend der nachstehenden Beschreibung handeln. Alternativ und/oder ergänzend kann es sich bei dem Trägerelement um ein Bauelement einer Gebäudestruktur, in die der Feuchtesensor verbaut ist, insbesondere einer nachstehend beschriebenen Gebäudestruktur, handeln. Das Bauelement kann insbesondere ein wasserführendes Bauelement, wie beispielsweise ein Rohr und/oder ein Abfluss sein.

Die Aufgabe wird durch ein Dichtelement für eine Gebäudestruktur gelöst, wobei das Dichtelement einen Feuchtesensor aufweist. Der Feuchtesensor weist weiterhin einen RFID-Transponder auf. Dabei ist ein Messwert des Feuchtesensors über den RFID-Transponder auslesbar. Bei der Gebäudestruktur kann es sich insbesondere um eine Wand, eine Decke oder einen Fußboden handeln. Bei dem Feuchtesensor kann es sich insbesondere um einen vorstehend beschriebenen Feuchtesensor handeln.

Es hat sich im Zusammenhang mit der vorliegenden Erfindung gezeigt, dass die Feuchteschäden der in Rede stehenden Art regelmäßig durch ein Versagen von Dichtelementen auftreten. Das Dichtelement ermöglicht daher eine einfache und effiziente Überwachung der Gebäudestruktur auf eindringende Feuchtigkeit, da diese bereits direkt an dem Dichtelement erkannt wird. Eine separate Positionierung von einzelnen Sensoren ist nicht notwendig, da das Dichtelement den Sensor aufweist und der Sensor daher zwangsläufig mit dem Dichtelement verbaut wird. Dadurch ist typischerweise auch die Position des Sensors, zumindest die ungefähre Position des Sensors bekannt, da Dichtelemente der in Rede stehende Art bestimmte typische Einbaulagen aufweisen, beispielsweise in Ecken, im Bereich von Leitungen und/oder sich über Flächen erstreckend angeordnet sind.

Der Messfühler erstreckt sich insbesondere entlang eines Randbereiches des Dichtelements. Eindringende Feuchtigkeit dringt vorzugsweise an Stellen in eine Gebäudestruktur ein, in denen derartige Dichtelemente mit anderen Elementen verbunden sind. Bei diesen anderen Elementen kann es sich um weitere Dichtelemente handeln, es kann sich jedoch auch um andere Bauelemente, beispielsweise Rohre, die insbesondere von dem Dichtelement umgeben sind, handeln. In derartigen Fällen ist es aufgrund des Messfühlers, der sich vorteilhafterweise von dem RFID-Transponder weg erstreckt, möglich, einen gefährdeten Bereich vergleichsweise großflächig auf das Auftreten von Feuchtigkeit zu überwachen, wobei lediglich ein einzelner RFID-Transponder ausgelesen werden muss, der sich vorzugsweise an einem zum Auslesen gut zugänglichen Bereich befindet.

Es hat sich gezeigt, dass diese großflächige Überwachung in der Praxis eine praktikable Lösung darstellt, da der exakte Ort des Auftretens der Feuchtigkeit häufig gar nicht gekannt werden muss. Beim Auftreten der Feuchtigkeit und eines entsprechenden Sanierungsbedarfes ist es regelmäßig ohnehin notwendig, die betroffene Gebäudestruktur großflächig zu eröffnen um den zugrundeliegenden Schaden zu beheben. Wichtig ist lediglich die Information, dass es überhaupt zum Auftreten der Feuchtigkeit gekommen ist. Diese Information kann der beschriebene Feuchtesensor liefern.

Bei dem Dichtelement kann es sich insbesondere um ein Dichtelement zum Abdichten eines aus der Gebäudestruktur hervortretenden Bauelements und/oder eines in die Gebäudestruktur eingearbeiteten Bauelements, beispielsweise eines Rohres und/oder eines Abflusses, handeln. Ein derartiges Dichtelement kann insbesondere einen Dichtbereich zur Anlage an dem Bauelement aus einem elastischen Werkstoff aufweisen. Bei einem derartigen Bauelement kann der Dichtbereich insbesondere eine Durchführungszone zur Durchführung des Bauelements durch das Dichtelement aufweisen. Bei der Durchführungszone kann es sich insbesondere um eine Öffnung handeln. Die Dichtwirkung wird bei derartigen Dichtelementen typischerweise dadurch erzielt, dass der Dichtbereich derart an dem Bauelement anliegt, dass der Dichtbereich elastisch verformt wird und die elastischen Materialspannungen im Dichtbereich, die aus dieser Verformung resultieren, für die dichtende Anlage des Dichtbereichs am Bauelement sorgen. Es hat sich gezeigt, dass Feuchtigkeit insbesondere dadurch auftreten kann, dass eine derartige Abdichtung versagt. Daher ist es, insbesondere bei der Verwendung derartiger Dichtelemente, sinnvoll, wenn der Messfühler so angeordnet ist, dass er bei bestimmungsgemäßer Verwendung des Dichtelements das Bauelement, zumindest teilweise, umgibt. Dies bedeutet insbesondere, dass die Durchführungszone des Dichtelements von dem Messfühler, zumindest teilweise, umgeben ist. Unter einem zumindest teilweisen Umgeben ist in diesem Zusammenhang insbesondere zu verstehen, dass das Bauelement bzw. die Durchführungszone wenigstens zu 50%, vorzugsweise wenigstens zu 80% von dem Messfühler umfasst wird.

Der Messfühler kann sich insbesondere entlang eines Randbereichs des Dichtelements erstrecken. Ein derartiger Randbereich des Dichtelements kann insbesondere dazu ausgebildet sein, bei bestimmungsgemäßer Verwendung des Dichtelements mit einem weiteren Dichtelement, verbunden zu werden. Dies ist insbesondere dann der Fall, wenn es sich bei dem Dichtelement um ein bahnförmiges Dichtelement, beispielsweise eine Dichtbahn, handelt. Derartige Dichtbahnen werden insbesondere zum Dichten vergleichsweise großer Flächen verwendet. Potentielle Schwachstellen im Hinblick auf das Eindringen von Feuchtigkeit sind dabei die Verbindungen zwischen den Dichtelementen untereinander bzw. Randbereiche des Dichtelements, die mit anderen Elementen verbunden werden. Auch ist es möglich, dass derartige Dichtelemente Ausnehmungen aufweisen, in die andere Elemente, insbesondere andere Dichtelemente, eingesetzt werden, die wiederum dichtend mit dem Dichtelement verbunden werden. So kann beispielsweise ein kleinflächiges Dichtelement, welches der Abdichtung eines aus der Wand heraustretenden Rohres dient, in ein größerflächiges, insbesondere bahnförmiges, Dichtelement eingesetzt und mit diesem dichtend verbunden werden. Die dichtende Verbindung kann dabei beispielsweise dadurch erfolgen, dass sich die Dichtelemente in einem Randbereich überlappen und in diesem insbesondere verklebt werden. In derartigen Fällen kann sich der Messfühler insbesondere entlang dem äußeren Randbereich des kleineren Dichtelements und/oder dem die Ausnehmung umgebenden Randbereich des größeren Dichtelements erstrecken. In vorteilhafter Weise kann der jeweilige Randbereich zu wenigstens 50%, vorzugsweise wenigstens 80% von dem Messfühler umgeben werden bzw. der Messfühler kann sich entlang eines entsprechenden Anteils des gesamten äußeren Randes an diesem entlang erstrecken.

Der Messfühler ermöglicht es insbesondere auch, die vergleichsweise langen äußeren Randbereiche bahnförmiger Dichtelemente zu überwachen, ohne hierfür eine Vielzahl von Feuchtesensoren verbauen zu müssen. Unter einem bahnförmigen Dichtelement ist hierbei insbesondere ein Dichtelement zu verstehen, dessen flächige Erstreckung um ein Vielfaches größer ist als seine Dicke und das in seinen flächigen Erstreckungsrichtungen Abmessungen von wenigstens 1m, vorzugsweise wenigstens 1,5m, und wenigstens 0,3m, vorzugsweise wenigstens 0,5m, aufweist. Durch eine Mehrzahl miteinander verbundener bahnförmiger Dichtelemente können so mit einer überschaubaren Anzahl Feuchtesensoren vergleichsweise große Flächen überwacht werden.

Dichtelemente der in Rede stehenden Art können, zumindest bereichsweise, aus einem flächigen Basismaterial sein. Bei diesem Basismaterial kann es sich um eine Kunststofffolie und/oder ein Vlies handeln, bzw. das Basismaterial kann eine Kunststofffolie und/oder ein Vlies aufweisen. Derartige Dichtelemente lassen sich dann insbesondere dadurch herstellen, dass ein Zuschnitt aus einem Basismaterial erfolgt. Dieser Zuschnitt kann dann durch weitere Elemente, beispielsweise elastische Dichtzonen und/oder gewinkelte Bereiche ergänzt werden, die mit dem Zuschnitt aus dem Basismaterial verbunden werden. Diese weiteren Bereiche können beispielsweise in einem Spritzgussverfahren angespritzt sein, es kann sich jedoch ebenfalls um anderweitig vorgefertigte, beispielsweise ebenfalls zugeschnittene, Bereiche handeln, die mit dem Basismaterial verbunden, beispielsweise verschweißt, verklebt und/oder durch Vulkanisation verbunden werden.

Insbesondere wenn es sich bei dem Dichtelement um ein bahnförmiges Dichtelement handelt, kann bei der Herstellung die Festlegung der Positionen des Messfühlers anhand der geplanten Einbausituation des jeweiligen Dichtelements erfolgen. Dies ist insbesondere in Verbindung mit einem Druckverfahren bei der Herstellung des Messfühlers, insbesondere der Leiterbahnen von Vorteil. Auf diese Weise ist es möglich, beispielsweise die Abmessungen der benötigten Abschnitte eines bahnförmigen Dichtelements bei dessen Verarbeitung beim Bau eines Gebäudes zu berücksichtigen. Mit anderen Worten, es wird ein bahnförmiges Dichtelement mit einer bestimmten Länge hergestellt, das dazu bestimmt ist, vor seiner Verarbeitung in einzelne Abschnitte aufgeteilt zu werden. Die Aufteilung kann beispielsweise vor Ort auf der Baustelle erfolgen. Die Messfühler können dann abschnittsweise entlang der Randbereiche der hergestellten Bahn derart aufgebracht werden, dass eine Aufteilung der Bahn in Abschnitte der benötigten Länge möglich ist, ohne dabei die Messfühler derart zu durchtrennen, dass die den einzelnen Abschnitten jeweils zugeordneten Messfühler in ihrer Funktion eingeschränkt werden. Das Verfahren zur Herstellung einer derartigen Dichtbahn kann insbesondere auch vorsehen, dass Markierungen aufgebracht werden, an denen die Bahnen in die einzelnen Abschnitte zu trennen sind.

Gleichermaßen können in den Bahnen an bestimmten Positionen Messfühler und/oder Markierungen vorgesehen werden, an denen Ausnehmungen, beispielsweise zur Durchführung eines Rohres, vorgesehen werden sollen.

Das Dichtelement kann, zumindest im Wesentlichen, flächig ausgebildet sein. Unter einem zumindest im Wesentlichen flächigen Dichtelement ist beispielsweise auch ein Dichtelement zu verstehen, welches geknickte und/oder abgewinkelte bzw. abgebogene Bereiche aufweist, wobei jedoch der überwiegende Teil des Dichtelements dennoch eine im Vergleich zu seiner Flächenerstreckung signifikant geringere Dicke aufweist.

Der Feuchtesensor eines derartigen Dichtelements ist insbesondere derart ausgebildet, dass er dazu geeignet ist, die Feuchtigkeit des mit einer bestimmten Flächenseite des Dichtelements in Kontakt stehenden Bereichs der Gebäudestruktur zu messen. Dies betrifft insbesondere die Anordnung des Feuchtigkeitssensors an dieser Flächenseite, weiter insbesondere die Anordnung der Leiterbahnen an dieser Flächenseite. Beispielsweise bei der Verwendung von, insbesondere flächigen, Dichtelementen in Nasszellen kann es notwendig sein, das die Erfassung des Feuchtewerts lediglich auf einer Seite des Dichtelements erfolgt, da das Dichtelement bei bestimmungsgemäßer Verwendung dazu bestimmt ist, von der anderen Seite auf das Dichtelement einwirkende Feuchtigkeit von der anderen Seite mit dem Dichtelement in Verbindung stehenden Gebäudestruktur abzuhalten. Mit anderen Worten, der Feuchtesensor des Dichtelements ist spezifisch für die eine Flächenseite des Dichtelements, während Feuchtigkeit auf der anderen Seite des Dichtelements von dem Feuchtesensor nicht erfasst wird.

Das Dichtelement kann eine Form aufweisen, die an eine von einer planen Fläche abweichende Gestalt eines Oberflächenbereichs einer Gebäudestruktur angepasst ist. Bei diesem Oberflächenbereich einer Gebäudestruktur kann es sich insbesondere um eine Ecke handeln. Derartige Dichtelemente können effizient eingesetzt werden, um Eckbereiche, beispielsweise zwischen Decken und Wänden, Wänden und Böden und/oder Wänden und Wänden abzudichten. Auch können dichte Verbindungen zu Einbauten, beispielsweise im Sanitärbereich, wie Badewannen, Duschwannen, Waschtischen und ähnlichem hergestellt werden.

Die Gebäudestruktur weist einen Feuchtesensor und/oder ein Dichtelement der vorstehend beschriebenen Art auf. Bei der Gebäudestruktur kann es sich um eine Wand, einen Fußboden und/oder eine Decke handeln. Insbesondere ist die Gebäudestruktur Bestandteil einer Nasszelle. Dabei kann das Dichtelement insbesondere Bestandteil der Abdichtung der Nasszelle, insbesondere der Abdichtung einer Wand, eines Bodens und/oder einer Decke einer Nasszelle sein.

Die Gebäudestruktur kann insbesondere ein wasserführendes Bauelement aufweisen. Bei diesem wasserführenden Bauelement kann es sich beispielsweise um ein Rohr und/oder einen Abfluss handeln. Der Feuchtesensor kann insbesondere derart angeordnet sein, dass der Messfühler das Bauelement umgibt und/oder sich an dem Bauelement entlang erstreckt. Dabei sind auch Mischformen, beispielsweise eine Art schraubenförmige Umwicklung des Bauelements mit dem Messfühler, möglich. Auf diese Weise kann ein Bauelement effizient mit einem einzigen Feuchtesensor auf austretende Feuchtigkeit überwacht werden. Unter einem das Bauelement umgebenden Messfühler ist insbesondere in Messfühler zu verstehen, der das Bauelement in einer betrachteten Ebene zu wenigstens 50%, vorzugsweise zu wenigstens 80%, umgibt.

Das Bauelement kann insbesondere das Trägermaterial bilden, auf dem der Feuchtesensor oder ein Bestandteil des Feuchtesensors als Druck aufgebracht ist und/oder an das der Feuchtesensor oder der Bestandteil des Feuchtesensors angespritzt ist. Auf diese Weise können Bauelemente geschaffen werden, die es ermöglichen, in einfacher Weise verarbeitet zu werden, wobei sichergestellt ist, dass sich der Feuchtesensor relativ zu dem Bauelement in einer geeigneten Position befindet, um dieses Bauelement effektiv auf Leckagen zu überwachen. Die Erfindung betrifft in diesem Zusammenhang auch insbesondere ein derartiges Bauelement mit einem Feuchtesensor.

Die Gebäudestruktur kann insbesondere ein Dichtelement der in Rede stehenden Art aufweisen, wobei das Dichtelement mittels einer Verklebung mit einem wasserhaltigen Klebstoff mit einem an das Dichtelement angrenzenden Bereich der Gebäudestruktur verbunden ist. Bei einer derartigen Anordnung kann der Feuchtesensor insbesondere die Feuchtigkeit des Klebstoffs messen. Auf diese Weise lässt sich mittels des Feuchtesensors überprüfen, ob der Klebstoff vollständig getrocknet ist. Insbesondere in der Verbindung mit der Möglichkeit, Daten in dem Feuchtesensor zu speichern, lässt sich auf diese Weise ein Nachweis über das korrekte Trocknen des Klebstoffs erbringen.

Weitere praktische Ausführungsformen und Vorteile der Erfindung sind nachfolgend im Zusammenhang mit den Zeichnungen beschrieben. Es zeigen:
- Fig. 1: eine schematische Darstellung eines beispielhaften Dichtelements,
- Fig. 2: eine schematische Darstellung eines weiteren beispielhaften Dichtelements.

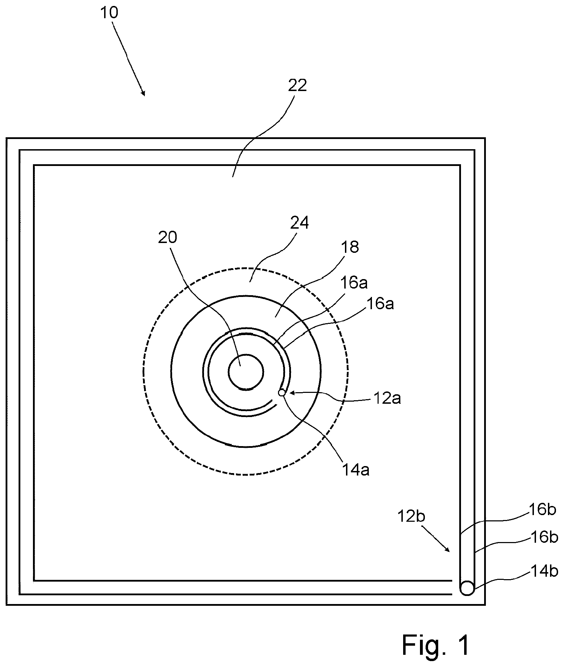

Das in Figur 1 beispielhaft dargestellte Dichtelement 10 kann zwei Feuchtesensoren 12a,b aufweisen. Jeder Feuchtesensor 12a,b weist beispielhaft einen RFID-Transponder 14a,b auf, sowie jeweils einen Messfühler 16a,b, die sich wie im gezeigten Beispiel von dem RFID-Transponder 14a,b weg erstrecken und als Leiterbahnenpaar ausgeführt sein können. Bei dem RFID-Transponder 14a,b kann es sich insbesondere um einen passiven RFID-Transponder 14a,b handeln. Jeder Feuchtesensor 12a,b kann ausgelesen werden, indem ein geeignetes Auslesegerät in die Nähe des jeweiligen RFID-Transponders 14a,b gebracht wird, so dass dieses mit dem RFID-Transponder 14a,b wechselwirken kann.

Das beispielhafte Dichtelement 10 weist einen Dichtbereich 18 auf. Dieser kann insbesondere aus einem elastischen Werkstoff gefertigt sein und dient zur Anlage an einem Bauelement, beispielsweise einem Rohr. In seiner Mitte weist der Dichtbereich 18 eine Durchführungszone 20 in Gestalt einer Öffnung auf, die zur Durchführung des Bauelements durch das Dichtelement 10 dient. Der Dichtbereich 18 kann wie im gezeigten Beispiel flächig gestaltet sein. Er kann mit einem flächigen Basismaterial 22 verbunden sein. Die Verbindung kann wie im gezeigten Beispiel unter Bildung einer Überlappung 24 erfolgen. Wie im gezeigten Beispiel kann ein Feuchtesensor 12a so angeordnet sein, dass er die Durchführungszone 20 umgibt. Konkret kann dies wie im gezeigten Beispiel bedeuten, dass die Messfühler 16a in Gestalt der Leiterbahnen, die sich wie im gezeigten Beispiel vom RFID-Transponder 14a weg erstrecken können, derart angeordnet sind, dass sie die Durchführungszone 20 bzw. das durch diese Durchführungszone 20 geführte Bauelement umgeben.

Wie im gezeigten Beispiel kann das Dichtelement 10 einen Feuchtesensor 12b aufweisen. Dieser kann sich entlang dem äußeren Rand des Dichtelements 10 erstrecken. Wie im gezeigten Beispiel kann dies insbesondere dadurch realisiert sein, dass sich die Leiterbahnen des Messfühlers 16b vom RFID-Transponder 14b des Feuchtesensors 12b entlang des Randes des Dichtelements 10 weg erstrecken.

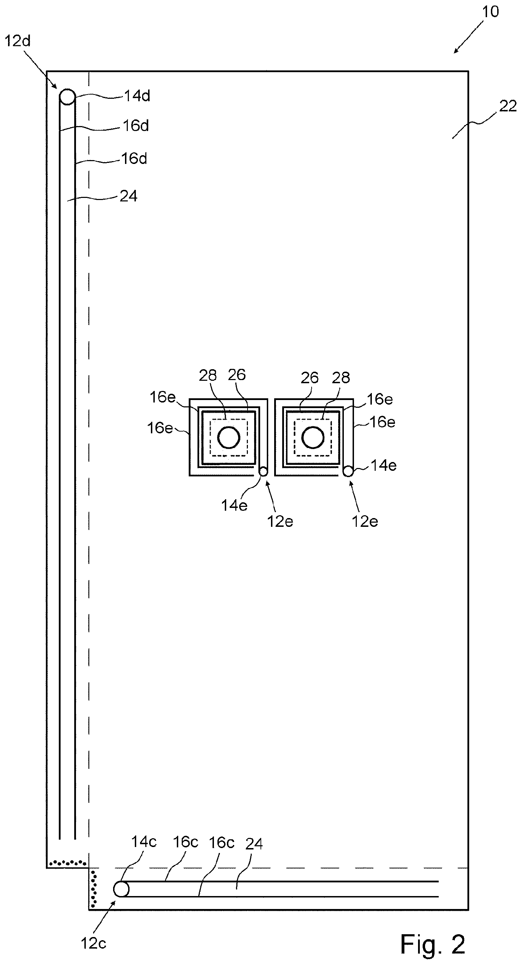

Das beispielhaft in Figur 2 dargestellte Dichtelement 10 ist bahnförmig gestaltet. Es kann sich insbesondere um einen Abschnitt eines bahnförmigen Basismaterials 22 handeln. Das beispielhafte Dichtelement 10 kann wie im gezeigten Beispiel insbesondere dazu ausgebildet sein, im Bereich seiner Ränder mit weiteren Dichtelementen 10 verbunden zu werden. Dementsprechend kann das Dichtelement 10 insbesondere einen Feuchtesensor, wie im gezeigten Beispiel die Feuchtesensoren 12c, 12d, aufweisen, bei denen sich die Leiterbahnen der Messfühler 16c, 16d von den RFID-Transpondern 14c, 14d entlang von Bereichen 24 weg erstrecken, die zur Verbindung des Dichtelements 10 mit weiteren Dichtelementen 10 bestimmt sind. Wie im gezeigten Beispiel abgebildet, kann ein derartiges Dichtelement 10 Ausnehmungen 26 aufweisen. Diese Ausnehmungen 26 können beispielsweise der Durchführung von Bauelementen dienen. In den Ausnehmungen 26 können weitere Dichtelemente 28 angeordnet werden, die insbesondere wie im gezeigten Beispiel überlappend mit dem Dichtelement 10 verbunden sein können. Wie in dem in Figur 2 gezeigten Beispiel kann eine Ausnehmung 26 in dem Dichtelement 10 von einem Feuchtesensor 12e umgeben sein. Der jeweilige Feuchtesensor 12e kann wie im gezeigten Beispiel einen RFID-Transponder 14e aufweisen, von dem sich zwei die jeweilige Ausnehmung 26 umgebende Leiterbahnen eines jeweiligen Messfühlers 16e weg erstrecken.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 10: Dichtelement
- 12: Feuchtesensor
- 14: RFID-Transponder
- 16: Messfühler
- 18: Dichtbereich
- 20: Durchführungszone
- 22: Basismaterial
- 24: Bereich/Überlappung
- 26: Ausnehmung
- 28: weiteres Dichtelement

- a, b, c, d, e: Indices

## Patentansprüche

1. Feuchtesensor für eine Gebäudestruktur, insbesondere eine Wand, eine Decke oder einen Fußboden, wobei der Feuchtesensor (12) einen RFID-Transponder (14) aufweist, wobei ein Messwert des Feuchtesensors (12) über den RFID-Transponder (14) auslesbar ist, wobei der RFID-Transponder eine Antenne aufweist, mittels derer der Transponder auslesbar ist, **dadurch gekennzeichnet, dass** der Feuchtesensor (12) zur Feuchtemessung einen von der Antenne getrennten Messfühler (16) aufweist, der sich insbesondere von dem RFID-Transponder (14) weg erstreckt.

2. Feuchtesensor nach Anspruch 1, **dadurch gekennzeichnet, dass** der RFID-Transponder auf einer Frequenz von 13,56 Mhz auslesbar ist.

3. Feuchtesensor (12) nach einem der vorigen Ansprüche, **dadurch gekennzeichnet, dass** es sich um einen passiven RFID-Transponder (14) handelt, insbesondere wobei die Energieversorgung des Feuchtesensors (12) über den RFID-Transponder (14) erfolgt, und/oder dass der Feuchtesensor eine von dem RFID-Transponder unabhängige Empfängerantenne des Feuchtesensors (12) zur induktiven Energieübertragung aufweist, insbesondere wobei die Energieversorgung des Feuchtesensors (12) über die Empfängerantenne (14) erfolgt.

4. Feuchtesensor (12) nach einem der vorigen Ansprüche, **dadurch gekennzeichnet, dass** der Feuchtesensor (12), insbesondere der RFID-Transponder (14), einen Datenspeicher zum Speichern von Daten aufweist, insbesondere wobei der Speicher dazu ausgebildet ist, einmalig mit Daten beschrieben zu werden.

5. Feuchtesensor (12) nach einem der vorigen Ansprüche, **dadurch gekennzeichnet, dass** der Messfühler (16) ein Paar Leiterbahnen aufweist und/oder aus einem Paar Leiterbahnen gebildet ist.

6. Feuchtesensor (12) nach einem der vorigen Ansprüche, **dadurch gekennzeichnet, dass** der Feuchtesensor (12) oder ein Bestandteil des Feuchtesensors (12), insbesondere der Messfühler (16) und/oder die Antenne des RFID-Transponders, als Druck, insbesondere als Geldruck und/oder Druck mit Metallionen, insbesondere Silberionen, auf ein Trägermaterial, insbesondere auf ein Dichtelement (10) aufgebracht ist.

7. Feuchtesensor (12) nach einem der vorigen Ansprüche, **dadurch gekennzeichnet, dass** der Feuchtesensor (12) oder ein Bestandteil des Feuchtesensors (12), insbesondere der Messfühler (16) und/oder die Antenne des RFID-Transponders, aus leitfähigem Kunststoff gefertigt, insbesondere an ein Trägermaterial, beispielsweise an ein Dichtelement (10), angespritzt, ist.

8. Dichtelement (10) für eine Gebäudestruktur, insbesondere eine Wand, eine Decke oder einen Fußboden, wobei das Dichtelement (10) einen Feuchtesensor (12), insbesondere einen Feuchtesensor nach einem der vorigen Ansprüche, aufweist, wobei der Feuchtesensor (12) einen RFID-Transponder (14) aufweist, wobei ein Messwert des Feuchtesensors (12) über den RFID-Transponder (14) auslesbar ist.

9. Dichtelement (10) nach Anspruch 8, **dadurch gekennzeichnet, dass** es sich um ein Dichtelement (10) zum Abdichten eines aus der Gebäudestruktur hervortretenden und/oder in die Gebäudestruktur eingearbeiteten Bauelements, insbesondere eines Rohres und/oder eines Abflusses, mit einem Dichtbereich (18) zur Anlage an dem Bauelement aus einem elastischen Werkstoff handelt, insbesondere wobei der Dichtbereich (18) eine Durchführungszone (20) zur Durchführung des Bauelements durch das Dichtelement (10) aufweist.

10. Dichtelement (10) nach Anspruch 8 oder 9, **dadurch gekennzeichnet, dass** die Leiterbahnen (16) so angeordnet sind, dass sie bei bestimmungsgemäßer Verwendung des Dichtelements (10) das Bauelement, insbesondere die Durchführungszone, zumindest teilweise, umgeben.

11. Dichtelement (10) nach einem der Ansprüche 8 bis 10, **dadurch gekennzeichnet, dass** sich die Leiterbahnen (16) entlang eines Randbereichs des Dichtelements (10) erstrecken, insbesondere wobei der Randbereich dazu ausgebildet ist, bei bestimmungsgemäßer Verwendung des Dichtelements (10) mit einem weiteren Dichtelement (28), insbesondere einem weiteren gleichartigen Dichtelement (28), verbunden zu werden.

12. Dichtelement (10) nach einem der Ansprüche 8 bis 11, **dadurch gekennzeichnet, dass** das Dichtelement (10), zumindest bereichsweise, aus einem flächigen Basismaterial (22) gefertigt ist, insbesondere wobei das Basismaterial (22) eine Kunststofffolie und/oder ein Vlies aufweist.

13. Dichtelement (10) nach einem der Ansprüche 8 bis 12, **dadurch gekennzeichnet, dass** das Dichtelement (10), zumindest im Wesentlichen, flächig ausgebildet ist, insbesondere wobei der Feuchtigkeitssensor (12) derart ausgebildet, insbesondere an einer der Flächenseiten derart angebracht ist, dass er dazu geeignet ist, die Feuchtigkeit des mit einer bestimmten Flächenseite in Kontakt stehenden Bereichs der Gebäudestruktur zu messen.

14. Dichtelement (10) nach einem der Ansprüche 8 bis 13, **dadurch gekennzeichnet, dass** das Dichtelement (10) eine an eine von einer planen Fläche abweichende Gestalt eines Oberflächenbereichs einer Gebäudestruktur, insbesondere an eine Ecke, angepasste Form aufweist.

15. Gebäudestruktur mit einem Feuchtesensor (12) nach einem der Ansprüche 1 bis 7 und/oder einem Dichtelement (10) nach einem der Ansprüche 8 bis 14, insbesondere wobei es sich bei der Gebäudestruktur um eine Nasszelle handelt.

16. Gebäudestruktur nach Anspruch 15, **dadurch gekennzeichnet, dass** die die Gebäudestruktur ein wasserführendes Bauelement aufweist und der Feuchtesensor (12) derart angeordnet ist, dass der Messfühler (16) das Bauelement umgibt und/oder sich an dem Bauelement entlang erstreckt.

17. Gebäudestruktur, nach Anspruch 15 oder 16, **dadurch gekennzeichnet, dass** das Dichtelement (10) mittels einer Verklebung mit einem wasserhaltigen Klebstoff mit einem an das Dichtelement (10) angrenzenden Bereich der Gebäudestruktur verbunden ist, so dass der Feuchtesensor (12) die Feuchtigkeit des Klebstoffs messen kann.
